# EUROPÄISCHE PATENTSCHRIFT

(11) **EP 0 547 468 B1**
(45) Veröffentlichungstag und Bekanntmachung des Hinweises auf die Patenterteilung: **23.04.1997**
(21) Anmeldenummer: 92120855.9
(22) Anmeldetag: 07.12.1992
(51) Int. Cl.: A61C 1/08

(54) **Zahnärztliches Instrument mit Mitteln zur Kühlung der Präparationsstelle**
Dental tool with means for cooling the location to be treated
Outil dentaire avec moyens pour refroidir l'endroit traité

(30) Priorität: 19.12.1991 DE 4142113
(43) Veröffentlichungstag der Anmeldung: 23.06.1993
(73) Patentinhaber: SIEMENS AKTIENGESELLSCHAFT, 80333 München (DE)
(72) Erfinder: Franetzki, Manfred, Dr., W-6140 Bensheim (DE); Wohlgemuth, Jürgen, Dipl.-Ing., W-6100 Darmstadt (DE)

(56) Entgegenhaltungen:
- CH-A- 557 673
- DE-A- 2 355 961
- US-A- 3 525 154

## Beschreibung

Beim Bearbeiten von Zähnen, insbesondere beim mechanischen Abtragen von Zahnhartsubstanz, mit aktiven Werkzeugen, wie z.B. rotierende, oszillierende Werkzeuge oder Laser, ist es notwendig, die Präparationsstelle zur Vermeidung von Wärmeschäden ausreichend zu kühlen. Diese Kühlung geschieht heute in der Regel, zumindest bei allen rotierenden Instrumenten, durch Zufuhr eines Wasser/ Luft-Gemisches als Spray (DE-23 55 961, SU-715009). Der Spray wird dabei in einer oder mehreren Düsen im Kopfgehäuse des Instruments erzeugt, indem ein relativ kleiner Volumenstrom Wasser und ein demgegenüber sehr viel größerer Volumenstrom Luft miteinander vermischt werden. Das Verhältnis der Volumenströme Luft zu Wasser beträgt dabei etwa 100:1. Die so dem Kühlwasser in relativ großer Menge zugegebene Luft trägt bei einer Präparation die Spraywolke als Aerosol aus dem Patientenmund in die benachbarte Umgebung. Nachdem bereits das aus einer Dentaleinheit austretende Wasser mit Keimen kontaminiert sein kann und der Sprayfluß durch mitgerissene Keime im Munde kontaminiert wird, besteht die Gefahr einer Verkeimung der Umgebung des Arbeitsfeldes und damit eine direkte Belastung für das behandelnde Personal und auch des nachfolgenden Patienten.

Frühere Versuche, das Werkzeug und die Präparationsstelle mit einem auf das Werkzeug gerichteten Wasserstrahl zu kühlen, sind aufgegeben worden. Offensichtlich war es sehr schwierig, den Wasserstrahl genau auf die Präparationsstelle auszurichten, insbesondere auf Dauer auszurichten, unter Berücksichtigung eventueller Verkalkungen oder Verstopfungen der extrem kleinen Düsenöffnung an der Wasseraustrittsstelle. Ein weiterer Grund lag darin, daß sich um schnell rotierende Werkzeuge ein Luftkissen bildet, an dem der Wasserstrahl abgelenkt wird, so daß es damit nicht möglich war, das Werkzeug oder auch die Präparationsstelle optimal zu treffen und damit zu kühlen. Die Kühlung per Wasserstrahl ist auch insofern nachteilig, als der Wasserstrahl an einer Zahnfläche abprallen und so den Behandler treffen kann.

Weitere Beispiele für bekannte Maßnahmen zur Kühlung der Präparationsstelle sind die CH-A-557 673, die DE-A-2 355 961 und US-A-3 525 154. In dem erstgenannten Dokument wird ein zahnärztliches Handstück mit mindestens einer eingebauten Kühlmittelleitung beschrieben, bei der in Nähe der Werkzeugaufnahme mindestens eine ins Freie mündende und auf das Werkzeug gerichtete rohrförmige Spritzdüse vorgesehen ist. Über die Spritzdüse kann Wasser, auch ein aus Wasser/Luft-Gemisch bestehender Spray oder auch nur Kühlluft allein auf das Werkzeug geleitet werden.

Bei der aus der DE-A-2 355 961 bekannten Einrichtung wird die Kühlflüssigkeit zunächst in eine Ringkammer eines stirnseitig des Instrumentenkopfgehäuses gehalterten Ringes geleitet. Sie tritt dort aber dann über drei am Umfang des Ringes angeordnete Öffnungen aus. Auch hier wird ein Mehrstrahl-Kühlsystem beschrieben, welches die vorgenannten Nachteile aufweist.

Eine ähnliche Anordnung ist in der US-A-3 525 154 beschrieben.

Der im Anspruch 1 angegebenen Erfindung liegt die Aufgabe zugrunde, demgegenüber eine Verbesserug zu erzielen, insbesondere Möglichkeiten aufzuzeigen, das angesprochene Hygieneproblem zu entschärfen und dafür zu sorgen, daß der Aerosolaustritt aus dem Patientenmund stark reduziert wird, dabei aber die angesprochenen Probleme der Kühlung per Wasserstrahl überwunden werden können.

Die Erfindung fußt auf der Erkenntnis, daß für den Keimtransport hauptsächlich der Luftstrom verantwortlich ist. Wie umfangreiche Untersuchungen gezeigt haben, tritt, wenn nur mit Wasser gekühlt wird bzw. wenn der Anteil an Luft extrem niedrig ist, nur ein sehr geringer Volumenstrom und damit praktisch keine Aeorsolwolke aus dem Patientenmund. Der relativ geringe Volumenstrom an Kühlwasser, der in einen Patientenmund eingebracht wird, und der in einem Bereich von ca. 50 bis 100 ml/min liegt, kann in der Regel mit Hilfe eines Speichelsaugers leicht entfernt werden, wodurch die Absaugung mit einer großvolumigen Absaugkanüle, wie sie derzeit praktiziert wird, in der Regel entfallen kann. Dadurch, daß praktisch ausschließlich mit Wasser gekühlt wird und durch geeignete Gestaltung der Austrittsöffnung des Wasserstrahls (Ringspalt) an der Düse des Handstückes das Wasser in einem größeren Raumwinkel um das Werkzeug herum sehr viel feiner und gleichmäßiger verteilt wird, als dies mit einzelnen Wasserstrahlen möglich ist, ergeben sich gegenüber bisherigen Kühlanordnungen wesentliche Vorteile. Wie bereits erwähnt, entfällt praktisch der relativ große Volumenstrom an Luft zur Spraybildung bzw. er wird auf ein solches Maß reduziert, daß praktisch keine Keime durch eine hohe Strömung losgerissen und mit der Aerosolwolke aus dem Patientenmund herausgetragen werden.

Ein wesentliches Merkmal der Erfindung ist, daß der Sprühstrahl nicht erst an der Werkzeugspitze durch deren Bewegung (Rotation oder Schwingung), sondern bereits vor dem Auftreffen auf das Werkzeug bzw. auf die Präparationsstelle im Ringspalt ein ringförmiger Wassermantel erzeugt wird. Die erfindungsgemäßen Maßnahmen können auf verschiedene Weise realisiert werden.

Nachfolgend werden anhand der Zeichnung einige Ausführungsformen der Erfindung näher beschrieben.

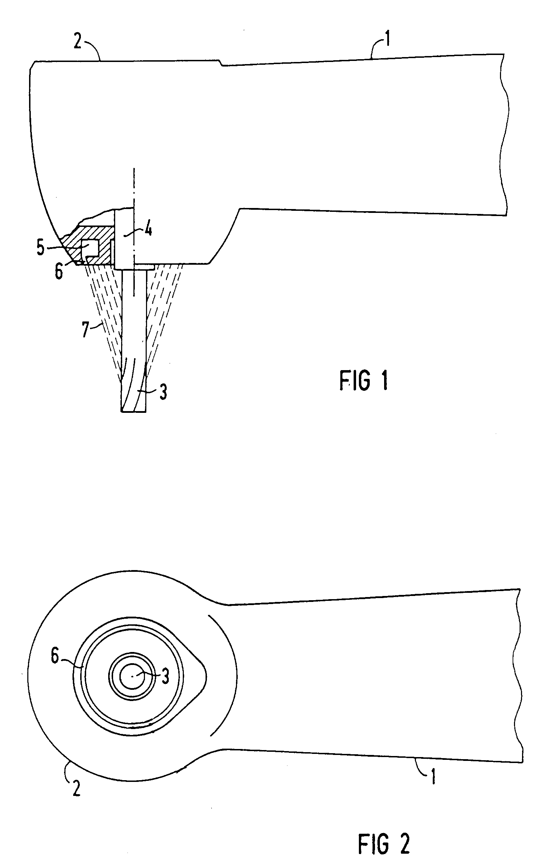

Die Figuren 1 und 2 zeigen in einer Seitenansicht, teilweise im Schnitt (Figur 1) und in einer Draufsicht von unten (Figur 2) ein zahnärztliches Instrument 1, in dessen Kopfgehäuse 2 ein Bohrwerkzeug 3 drehbar gelagert ist. Die zum Antrieb des Werkzeuges 3 sowie zur Kühlung der Präparationsstelle erforderlichen Medien werden in bekannter Weise an das Kopfgehäuse herangeführt. Das Kühlwasser wird unter möglichst hohem Druck in einen die Antriebswelle 4 konzentrisch umgebenden Ringkanal 5 eingeleitet, der sich in axialer Richtung zu einem schmalen Ringspalt 6 verjüngt. Der Ringspalt 6 bildet die Düsenaustrittsöffnung für einen dünnen Wassermantel 7, der das Werkzeug 3 kegelförmig umgibt. Anstelle der kegelförmigen Ausbildung des Wassermantels 7 kann durch geeignete Formgebung der Düsenaustrittsöffnung auch ein zylindrischer Wassermantel erzeugt werden, der, um den erwünschten Kühleffekt an der Präparationsstelle zu bekommen, zweckmäßigerweise relativ nahe dem Werkzeugschaft am Kopfgehäuse austreten sollte. Der Wassermantel ist ein am Umfang geschlossener Wassermantel. Alternativ zu den beiden aufgezeigten Formen eines Wassermantels sind auch andere geometrische Formen einer Ausbildung des Wassermantels denkbar, z.B. solche, die im Querschnitt ein Vieleck bilden.

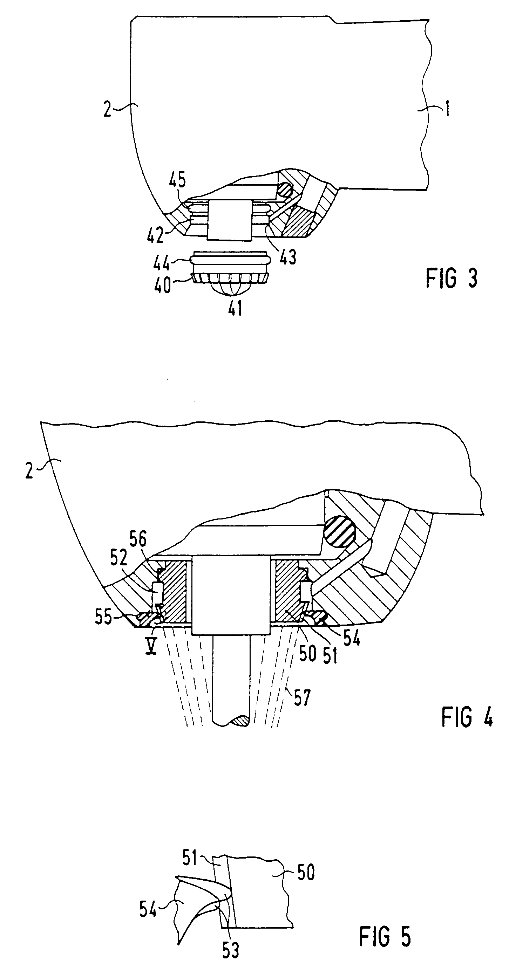

Die Figur 3 zeigt eine Variante, bei der stirnseitig des Kopfgehäuses 2 des Instruments 1 ein Ringdüseneinsatzteil 40 leicht lösbar gehaltert ist. Das Einsatzteil 40 - hier im abgenommenen Zustand gezeichnet, weist am Umfang eine Vielzahl von offenen Verteilerkanälen 41 auf, die zusammen mit einem Ringkanal 42 und einer Gehäusefläche 43 im Kopfgehäuse 2 die Austrittsöffnung für das Kühlwasser bilden. Zum Kopfgehäuseinneren hin ist das Einsatzteil 40 mit einem Dichtring 44 versehen, der mit einer entsprechend ausgebildeten Ringnut 45 im Kopfgehäuse 2 korrespondiert. Dichtring und Ringnut sind so ausgebildet, daß sie gleichsam auch zur Halterung des Einsatzteiles im Kopfgehäuse dienen. Die Gehäusefläche 43 verläuft von der Austrittsöffnung aus schräg nach außen, wodurch zwischen Einsatzteil und Kopfgehäuse ein Raum gebildet wird, der u.a. das Reinigen der Kanäle erleichtert bzw. einer Verstopfung entgegenwirkt.

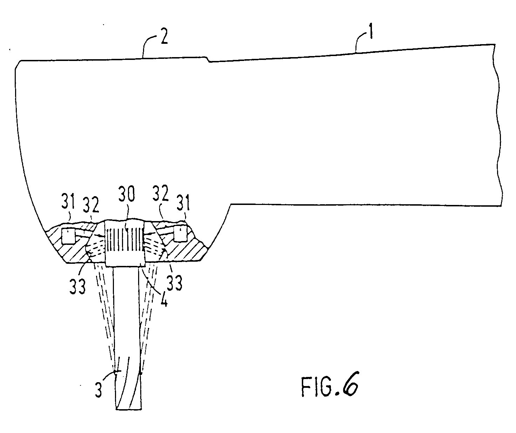

Die Figuren 4 und 5 zeigen eine Variante, bei der ein Einsatzteil 50, ähnlich wie bei der zuvor beschriebenen Ausführung, offene Verteilerkanäle 51 aufweist, die zusammen mit einem Ringkanal 52 die Austrittsöffnung für das Kühlwasser bilden. Die Austrittsöffnung ist auch hier so gestaltet, daß sich konzentrisch um den Werkzeugschaft ein auf die Präparationsstelle ausgerichteter Wassermantel 57 bildet. Im drucklosen Zustand ist sie durch eine elastische Dichtlippe 53 eines weiteren, im Kopfgehäuse 2 herausnehmbar gehalterten Einsatzteils 54 verschlossen. Die Elastizität der Dichtlippe ist so bemessen, daß die Dichtlippe 53 die Austrittsöffnung erst bei Druckbeaufschlagung freigibt. Damit wird der Vorteil erreicht, daß keine unerwünschten Partikel von außen in die Kühlmedienführung eindringen können. Mit den aufgezeigten Ausführungsformen kann einer Verkalkung und einer Verstopfung wirksam entgegengewirkt werden. Die Einsatzteile können im Kopfgehäuse auch eingeschraubt sein; jedoch hat die dargestellte steckbare Ausführung den Vorteil einer wesentlich leichteren Handhabbarkeit. Besonders vorteilhaft ist es, wenn die Einsatzteile aus einem Material mit relativ schlechten Hafteigenschaften für Kalk und Schmutz bestehen, z.B. aus dem Material PTFE. Des weiteren können die Einsatzteile, zumindest im Bereich des Wasseraustritts, aus einem elastischen Material, z.B. aus Silikonkautschuk, bestehen, bei dem durch die elastische Verformung eventuell festsitzender Kalk oder Schmutz sehr leicht abgesprengt werden kann. Schließlich können die Einsatzteile, wie gezeigt, gleich mit angeformten Ringwülsten (Pos. 55 und 56) zu deren Befestigung bzw. Abdichtung versehen sein.

Bei der Ausführung nach Figur 6 ist die Antriebswelle 4 für das Werkzeug 3 mit Prallflächen 30 versehen, gegen die das aus dem Ringkanal 31 kommende und über Düsen 32 auf die Welle gerichtete Wasser gelenkt wird. Durch die rotierende Antriebswelle wird das Kühlwasser an den Prall- oder Wirbelflächen 30 zerstäubt und infolge die Zentrifugalkraft nach außen geschleudert, wo es an ebenfalls konzentrisch angeordneten Leitflächen 33 in Form eines homogenen Sprühstrahles in Richtung Werkzeug 3 umgelenkt wird.

## Patentansprüche

1. Zahnärztliches Instrument mit einem aktiven Werkzeug (3) zur Bearbeitung von insbesondere Zahnhartsubstanz, bei dem zur Kühlung der Präparationsstelle Wasser verwendet wird, welches auf die Präparationsstelle ausgerichtet an einer Düsenanordnung (6, 41, 42; 51-53), abgegeben wird, wobei der Volumenanteil an Kühlluft Null ist bzw. maximal in der Größenordnung des zugeführten Wassers liegt und die Düsenanordnung einen Ringspalt (6) als Wasseraustrittsöffnung enthält, der so gestaltet ist, daß das Wasser in Form eines das Werkzeug (3) umgebenden Wassermantels (7, 57) austritt.

2. Instrument nach Anspruch 1, bei dem der Ringspalt (6) so gestaltet ist, daß der austretende Wassermantel kegel- oder zylinderförmig ist.

3. Instrument nach Anspruch 1, bei dem die Wasseraustrittsöffnung durch einen Ringkanal (42, 52) und ein Einsatzteil (40, 50) gebildet sind, wobei das Einsatzteil (40) im Kopfgehäuse (2) des Instruments lösbar gehaltert ist.

4. Instrument nach Anspruch 3, bei dem das Einsatzteil (40, 50) am Umfang eine Vielzahl von offenen Verteilerkanälen (41, 51) aufweist, die im montierten Zustand mit dem Ringkanal (42, 52) im Kopfgehäuse (2) die Wasseraustrittsöffnung bilden.

5. Instrument nach einem der Ansprüche 1 bis 4, bei dem der Ringkanal ein elastisches Element (53) beinhaltet, welches im drucklosen Zustand die Austrittsöffnung verschließt und bei Druckbeaufschlagung freigibt.

6. Instrument nach einem der Ansprüche 3 bis 5, bei dem zumindest die die Austrittsöffnung bildenden Teile aus einem formelastischen Material bestehen.

7. Instrument nach Anspruch 1, mit einem in Rotation versetzbaren Werkzeug (3), bei dem an der das Werkzeug (3) aufnehmenden Welle (4) und/oder am Werkzeug (3) selbst Wirbelflächen (30) vorgesehen sind, auf die das Kühlwasser gerichtet ist.

## Claims

1. Dental instrument having an active tool (3) for the treatment of, in particular, hard dental substance, in which water is used to cool the preparation site, which water aligned with the preparation site is delivered from a nozzle arrangement (6, 41, 42; 51-53), wherein the proportion of cooling air in terms of volume is zero or maximally lies in the order of magnitude of the water supplied and the nozzle arrangement contains an annular gap (6) as a water-discharge opening which is shaped in such a way that the water emerges in the form of a water jacket (7, 57) which surrounds the tool (3).

2. Instrument according to claim 1, wherein the annular gap (6) is shaped in such a way that the emerging water jacket is conical or cylindrical.

3. Instrument according to claim 1, wherein the water-discharge openings are formed by means of an annular channel (42, 52) and an insert portion (40, 50), wherein the insert portion (40) is detachably held in the head housing (2) of the instrument.

4. Instrument according to claim 3, wherein the insert portion (40, 50) has on the circumference a plurality of open distributor channels (41, 51) which in the assembled state together with the annular channel (42, 52) in the head housing (2) form the water discharge opening.

5. Instrument according to one of the claims 1 to 4, wherein the annular channel contains an elastic element (53) which closes the discharge opening in the pressureless state and frees it when pressure is applied.

6. Instrument according to one of the claims 3 to 5, wherein at least the portions, which form the discharge opening, consist of a material with elasticity of shape.

7. Instrument according to claim 1, having a tool (3) which can be set rotating, wherein provided on the shaft (4) holding the tool (3) and/or on the tool (3) itself there are eddy surfaces (30) to which the cooling water is directed.

## Revendications

1. Instrument dentaire qui comporte un outil (3) actif servant à enlever mécaniquement notamment l'émail de la dent et dans lequel, pour refroidir le point à traiter, on utilise de l'eau qui est fournie sur un dispositif (6, 41, 42; 51 à 53) de buses en étant dirigée vers le point à traiter, la proportion en volume d'air de refroidissement étant égale à zéro ou au maximum de l'ordre de grandeur de l'eau envoyée et le dispositif de buses comportant un passage (6) annulaire servant d'ouverture de sortie de l'eau qui est formé de manière que l'eau sorte sous la forme d'une chemise (7, 57) d'eau entourant l'outil (3).

2. Instrument suivant la revendication 1, dans lequel le passage (6) annulaire est formé de manière que la chemise d'eau qui sort soit de forme conique ou cylindrique.

3. Instrument suivant la revendication 1, dans lequel l'ouverture de sortie de l'eau est formée par un canal (42, 52) annulaire et par un insert (40, 50), l'insert (40) étant fixé de manière amovible dans le boîtier (2) de tête de l'instrument.

4. Instrument suivant la revendication 3, dans lequel l'insert (40, 50) comporte sur le pourtour un grand nombre de canaux (41, 51) répartiteurs ouverts qui, à l'état monté, forment l'ouverture de sortie de l'eau conjointement avec le canal (42, 52) annulaire situé dans le boîtier (2) de tête.

5. Instrument suivant l'une des revendication 1 à 4, dans lequel le canal annulaire contient un élément (53) élastique qui ferme l'ouverture de sortie de l'eau lorsqu'il n'y pas de pression et le dégage en cas d'alimentation en pression.

6. Instrument suivant l'une des revendication 3 à 5, dans lequel au moins les pièces formant l'ouverture de sortie d'eau sont en un matériau élastique déformable.

7. Instrument suivant la revendication 1 qui comporte un outil (3) qui peut être mis en rotation et dans lequel il est prévu sur l'arbre (4) recevant l'outil (3) et/ou sur l'outil (3) lui même des surfaces (30) de tourbillonnement vers lesquelles l'eau de refroidissement est dirigée.
